# EUROPEAN PATENT SPECIFICATION

(11) **EP 3 404 932 B1**
(45) Date of publication and mention of the grant of the patent: **18.10.2023**
(21) Application number: 18172826.2
(22) Date of filing: 17.05.2018
(51) Int. Cl.: H04R 1/34, H04R 5/02, H04R 1/02

(54) **LOUDSPEAKER SYSTEM AND CONFIGURATIONS FOR DIRECTIONALITY AND DISPERSION CONTROL**
LAUTSPRECHERSYSTEM UND KONFIGURATIONEN ZUR RICHTUNGS- UND ABSTRAHLKONTROLLE
SYSTÈME DE HAUT-PARLEUR ET CONFIGURATIONS DE DIRECTIVITÉ ET DE CONTRÔLE DE LA DISPERSION

(30) Priority: 18.05.2017 US 201762508314 P
(43) Date of publication of application: 21.11.2018
(73) Proprietor: Harman International Industries Incorporated (STM), Stamford, CT 06901 (US)
(72) Inventor: Winton, Riley, Canton, MI 48187 (US); Ludwig, Chris, Troy, MI 48084 (US)
(74) Representative: Rummler, Felix

(56) References cited:
- WO-A1-2016/123360
- WO-A1-2016/179238
- DE-A1-102015 001 691
- JP-A- H0 672 253
- JP-U- S5 435 630
- US-A1- 2004 035 635
- US-A1- 2015 078 580
- US-A1- 2015 086 035

## Description

### FIELD

The present disclosure relates to loudspeaker systems and configurations, and more particularly to vehicle loudspeaker systems and configurations for directionality and dispersion control.

### BACKGROUND

Modern vehicle acoustic systems use a variety of speakers and speaker configurations. For desired sound quality and performance, implementation of speakers with existing configurations requires a substantial amount of space in the vehicle, especially for subwoofer speakers. There exists a desire to provide significant performance improvements and savings in weight and volume occupied by speaker systems. There also exists a desire for improved directionality within and external to vehicles.

JP S54 35630 U describes a loudspeaker having fins for directing the output of the loudspeaker.

US 2015/078580 A1 describes a loudspeaker arrangement in a vehicle that can be adjusted to at least an inoperative position, a projecting position, and an operating position.

US 2004/035635 A1 describes a vibration reducing apparatus comprising, a baffle subject to vibration, a first electroacoustical transducer characterized by a first mass seated in the baffle, a second electromechanical transducer mechanically connected to said first transducer or said baffle in the vicinity of the periphery of the first transducer.

WO 2016/123360 A1 describes an audio system for a vehicle with a woofer speaker having a front side for producing a required bass-range acoustic output in a passenger compartment of the vehicle and a back side having an infinite baffle.

JP H06 72253 A describes an sound reproducing device in a vehicle for directing sound to the respective centers of the driver's seat and front passenger's seats

WO 2016/179238 A1 describes a venting system for a vehicle speaker assembly including an internal enclosure provided within a first vehicle component and having the vehicle speaker assembly disposed therein, a vent provided in the internal enclosure, and a port provided in a second vehicle component, wherein engagement of the vent with the port allows for an output generated by the vehicle speaker assembly to be transmitted from the internal enclosure to the second vehicle component.

### BRIEF SUMMARY OF THE EMBODIMENTS

The present invention is defined in the independent claims. Preferred features are recited in the dependent claims. In the following description, any embodiment referred to and not falling within the scope of the claims is merely an example useful to the understanding of the invention.

Disclosed and claimed herein are methods, devices and systems for loudspeakers and loudspeaker control. In one embodiment, a loudspeaker configuration includes a loudspeaker, and a directional element coupled to the loudspeaker. In one embodiment, the directional element includes a plurality of movable elements configured for passive directivity of output of the loudspeaker based on the positioning of the movable elements.

In one embodiment, the directional element includes a housing and a plurality of uniform elements arranged in the housing, wherein elements of the directional element are configured to rotate to a left position, center position, and right position.

In one embodiment, the directional element includes a moveable louver system mounted to the loudspeaker, the movable louver system including a plurality of parallel slat elements configured to be positioned in a plurality of positions, wherein the plurality of slat elements are configured to direct sound output by the loudspeaker based on the position of slat elements.

In one embodiment, the plurality of movable elements move as a unit to direct output of the loudspeaker in at least one direction.

In one embodiment, the directional element is mounted to a cone of the loudspeaker and wherein the directional element includes a plurality of movable elements configured based on the shape of the cone, and wherein the plurality of movable elements provide a waveguide for audio output of the loudspeaker to provide passive directivity through acoustic dispersion.

In one embodiment, the loudspeaker includes a second loudspeaker configured to output sound in a second direction, wherein the second loudspeaker is arranged in a coaxial arrangement with the loudspeaker and directional element.

Another embodiment is directed to bidirectional loudspeaker. In one embodiment, the bidirectional loudspeaker includes a first loudspeaker configured to output sound in a first direction. The bidirectional loudspeaker also includes a second loudspeaker configured to output sound in a second direction, wherein the first loudspeaker and second loudspeaker are arranged in a coaxial arrangement.

In one embodiment, the bidirectional speaker is configured for operation in a vehicle with the first loudspeaker configured to output sound to a vehicle interior and wherein the second loudspeaker is configured to output sound to the vehicle exterior.

In one embodiment, the second loudspeaker is configured to output environmental sound outside of the vehicle.

In one embodiment, the bidirectional speaker is configured to operate with a movable element for the second loudspeaker.

In one embodiment, the movable element provides speaker venting for the second loudspeaker in a vehicle door.

In one embodiment, the first loudspeaker includes moveable louver system mounted to the first loudspeaker, the movable louver system including a plurality of parallel slat elements configured to be positioned in a plurality of positions, wherein the plurality of slat elements are configured to direct sound output by the first loudspeaker based on the position of slat elements.

In one embodiment, the first loudspeaker includes an acoustic horn to direct sound inside of a vehicle, and the second loudspeaker includes an acoustic horn to direct sound outside of a vehicle.

In one embodiment, a motor structure of the first loudspeaker is coupled to the motor structure of the second loudspeaker.

In one embodiment, the first direction associated with the loudspeaker is opposite the second direction associated with the second loudspeaker.

One embodiment is directed to a method for controlling a loudspeaker and a movable element. The method includes detecting a control setting for at least one of a loudspeaker and a movable element associated with the loudspeaker. The method also includes controlling the movable element in response to the control setting, wherein the movable element is adjusted to direct output of the loudspeaker.

In one embodiment, controlling the movable element includes controlling a plurality of uniform elements arranged in the housing to rotate to a left position, center position, and right position.

In one embodiment, controlling the movable element includes controlling a moveable louver system mounted to the loudspeaker, the louver system including a plurality of parallel slat elements configured to be positioned in a plurality of positions, wherein the plurality of slat elements are configured to direct sound output by the loudspeaker based on the position of slat elements.

In one embodiment, controlling the movable element of the loudspeaker is configured to operate with a sliding door the second loudspeaker.

In one embodiment, controlling includes controlling output of an outward facing sound element of a bidirectional speaker.

Other aspects, features, and techniques will be apparent to one skilled in the relevant art in view of the following detailed description of the embodiments.

### BRIEF DESCRIPTION OF THE DRAWINGS

The features, objects, and advantages of the present disclosure will become more apparent from the detailed description set forth below when taken in conjunction with the drawings in which like reference characters identify correspondingly throughout and wherein:
FIG. 1 depicts a graphical representation of a system according to one or more embodiments;
FIG. 2 depicts a process for speaker control according to one or more embodiments;
FIG. 3 depicts a graphical representation of a bidirectional speaker configuration according to one or more embodiments;
FIG. 4 depicts a graphical representation of speaker system according to one or more embodiments; and
FIGs. 5A-5C depict a directional speaker configuration according to one or more embodiments which are not covered by the invention.

### DETAILED DESCRIPTION OF THE EXEMPLARY EMBODIMENTS

### Overview and Terminology

One aspect of the disclosure is directed to vehicle systems and configurations for loudspeakers and loudspeaker configurations for directionality and dispersion control. In one embodiment, a system is provided to control speakers and speaker elements. The system may include movable elements to allow for sound to be dispersed externally of a vehicle. In other embodiments, directional elements may be provided to direct sound within a vehicle cabin.

In one embodiment, a loudspeaker configuration is directed to a bidirectional speaker configuration including a modified coaxial arrangement with two speaker cones.

Another embodiment is directed to a speaker venting a mechanism to allow for speaker output to more easily disperse from a vehicle door panel. The venting system allows for in-vehicle acoustic systems to utilize externally coupled subwoofer solutions (ECS), where the front of the woofer cone is acoustically presented to vehicle occupants, while the back of the cone acoustically "sees" the outside world.

Another embodiment is directed a directional speaker arrangement including directional element having a plurality of movable elements. The directional element allows for passive directivity of a loudspeaker to be changed to automatically to address changing needs of the user.

Other embodiments are directed to processes for speaker control. In one embodiment, a process is provided for controlling a loudspeaker and a movable element. A control setting may be detected for at least one of a loudspeaker and a movable element associated with the loudspeaker. The movable element may be controlled in response to the control setting such that the movable element is adjusted to direct output of the loudspeaker

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

Reference throughout this document to "one embodiment," "certain embodiments," "an embodiment," or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics may be combined in any suitable manner on one or more embodiments without limitation.

### Exemplary Embodiments

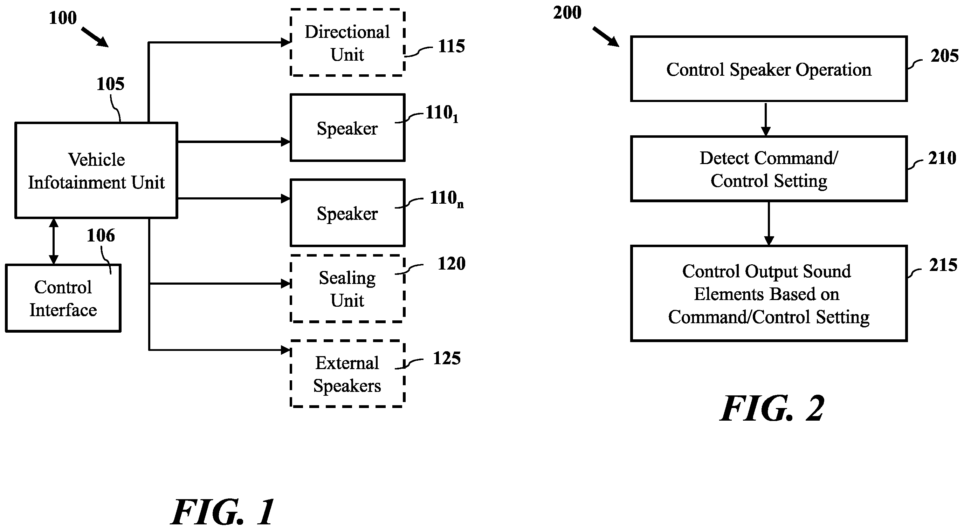

Referring now to the figures, FIG. 1 depicts a graphical representation of a system according to one or more embodiments. In one embodiment, system **100** is a vehicle infotainment system. System **100** includes vehicle infotainment unit **105** which may provide one or more of driver assistance, navigation, media and vehicle control features. In one embodiment, system **100** includes control interface **106** which may be employed to provide one or more commands to vehicle infotainment unit **105**. Commands may be directed to output of media, speakers settings (e.g., equalizer settings, fade and left right control). Commands may also be directed to one or more of directionality and movable element control as described herein. Control interface **106** may include a display and one or more input controls, such as a touch screen display to present a user interface for vehicle infotainment unit **105**, input and adjustment of commands and display.

According to one embodiment, vehicle infotainment unit **105** drives one or more speakers **110₁₋ₙ** of a vehicle. Speakers **110₁₋ₙ** may be loudspeakers and may be directed to one or more driver types including full range drivers, subwoofers, woofers, mid-range drivers, tweeters and coaxial drivers. According to another embodiment, and as will be discussed in more detail below, vehicle infotainment unit **105** may be configured to control one or more units associated with loudspeakers **110₁₋ₙ**, such as optional directional unit **115** and optional sealing unit **120**. According to another embodiment, speakers **110₁₋ₙ** may relate to a bidirectional speaker as discussed herein.

According to one embodiment, vehicle infotainment unit **105** includes a processor or control to perform one or more functions which may be stored in a memory vehicle infotainment unit **105**. Vehicle infotainment unit **105** may perform one or more processes described herein for control of vehicle.

According to another embodiment, system **100** may relate to a media system such as the vehicle audio system configured to control one or more loudspeakers and output of media to the speakers. Accordingly, system **100** may not require functionality associated with driver assistance or navigation (e.g., global positioning service (GPS)) in certain embodiments.

FIG. 2 depicts a process for speaker control according to one or more embodiments. According to one embodiment, process **200** may be performed for controlling a loudspeaker and a movable element. Process **200** may be employed by a device, such as the vehicle infotainment unit (e.g., vehicle infotainment unit **105**) or a vehicle control unit (e.g., media player, etc.) of a vehicle system (e.g., system **100**). At block **205**, control setting can be detected for at least one of a loudspeaker and a movable element associated with the loudspeaker. According to one embodiment, process **200** may be initiated by the vehicle infotainment unit controlling speaker operation at block **205**. At block **210**, one or more commands or control settings may be detected associated with vehicle components. For example, a movable element may be controlled in response to the control setting at block **210**, such that the movable element is adjusted to direct output of the loudspeaker. The vehicle infotainment unit may control the output of sound elements including speakers and other units based on the detected command and/or control setting at block **215**.

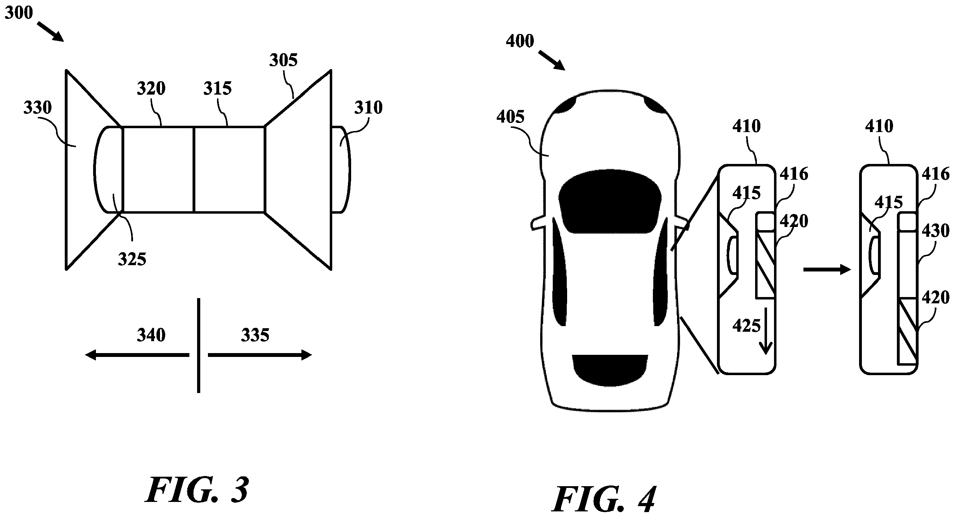

In one embodiment, commands and controls at blocks **210** and **215** relate to commands associated with a movable element of the vehicle for control of sound external the vehicle, such as a sealing unit (e.g., optional sealing unit **120**). According to another embodiment, commands and controls at blocks **210** and **215** relate to directionality of speaker elements within a vehicle such as an optional directional unit (e.g., an optional directional unit **115**). In one embodiment, controlling the movable element includes controlling a plurality of uniform elements arranged in the housing to rotate to a left position, center position, and right position. According to another embodiment, controlling the movable element includes controlling a moveable louver system mounted to the loudspeaker, the louver system including a plurality of parallel slat elements configured to be positioned in a plurality of positions, wherein the plurality of slat elements are configured to direct sound output by the loudspeaker based on the position of slat elements. Controlling can include controlling output of the movable element of the bidirectional speaker is configured to operate with a sliding door the second loudspeaker. Control can include controlling an outward facing sound element of a bidirectional speaker. FIG. 3 depicts a graphical representation of a bidirectional speaker configuration according to one or more embodiments. According to one embodiment, speaker **300** is a bi-directional coaxial speaker configured to direct sound in two directions. According to one embodiment, speaker **300** is a bidirectional loudspeaker including a first loudspeaker configured to output sound in a first direction and a second loudspeaker configured to output sound in a second direction. According to another embodiment, the first loudspeaker and second loudspeaker are arranged in a coaxial arrangement.

In one embodiment, speaker **300** is a bidirectional speaker configured for operation in a vehicle with the first loudspeaker configured to output sound to a vehicle interior and wherein the second loudspeaker is configured to output sound to the vehicle exterior. The second loudspeaker may be configured to output environmental sound outside of the vehicle, such as sound of the vehicle. Speaker **300** may be configured to operate with a movable element for the second loudspeaker as will be described with reference to FIG. 4. The movable element can provide speaker venting for the second loudspeaker in a vehicle door. The first loudspeaker can include an acoustic horn to direct sound inside of a vehicle, and the second loudspeaker can include an acoustic horn to direct sound outside of a vehicle

According to one embodiment, speaker **300** may include a first loudspeaker that includes moveable louver system mounted to the first loudspeaker. The movable louver system can include a plurality of parallel slat elements configured to be positioned in a plurality of positions. The plurality of slat elements are configured to direct sound output by the first loudspeaker based on the position of slat elements.

According to one embodiment bidirectional speaker **300** includes a modified coaxial speaker with 2 speaker cones, such that one cone fires forward in a traditional manner, with one additional speaker cone firing rearward. This allows full performance in the traditional forward direction, but also enables environmental sound to be generated outside of the vehicle cabin. The rear-firing speaker cone can be packaged with an acoustic lens or horn to improve dispersion characteristics.

According to one embodiment, bidirectional speaker **300** includes primary woofer cone **305**, primary tweeter cone **310**, and primary motor structure **315** forming a first loudspeaker to direct sound in a first direction **335**, and bidirectional speaker **300** also includes secondary motor structure **320**, secondary tweeter cone **325** and sound guide **330** forming a second loudspeaker to direct sound in a second direction **340.** FIG. 3 shows a motor structure of the first loudspeaker is coupled to the motor structure of the second loudspeaker. The first direction 335 associated with the loudspeaker is opposite the second direction **340** associated with the second loudspeaker. Sound guide **330** may relate to an acoustic horn in one embodiment. In another embodiment, sound guide **330** is a dispersion louver according to another embodiment.

According to one embodiment, bidirectional speaker **300** enables integrated acoustic performance for both inside and outside of a vehicle cabin. In addition, bidirectional speaker **300** can allow for simplification of packaging of speakers while keeping complexity and amplifier channels to a minimum. The rear-firing (e.g., external) speaker can have an integrated acoustic horn or lens to promote desired dispersion characteristics.

According to one embodiment, bidirectional speaker **300** may be mounted in a vehicle, such as a vehicle door panel, wherein the primary woofer cone **305**, primary tweeter cone **310**, and primary motor structure **315** to provide sound to the interior cabin of the vehicle. The secondary motor structure **320**, secondary tweeter cone **325** and sound guide **330** may be configured to direct sound externally of the vehicle. In certain embodiments, sound output by the primary woofer cone **305**, primary tweeter cone **310**, and primary motor structure **315** may be different than sound output by the secondary motor structure **320**, secondary tweeter cone **325** and sound guide **330**. By way of example, the secondary motor structure **320**, secondary tweeter cone **325** and sound guide **330** may provide sound for external car audio applications. By way of example bidirectional speaker **300** may be employed for an electronic vehicle to identify the presence of the vehicle and other safety situations for silent electric vehicles. External audio applications may also include social environments such as tailgates, parties, or a worksite where users may desire to broadcast their content outside of the vehicle. As such, bidirectional speaker **300** provides a transducer technology for inside and outside of a vehicle.

FIG. 4 depicts a graphical representation of speaker system according to one or more embodiments. System **400** provides for a mechanism to allow for speaker output to more easily disperse from a vehicle door panel. System **400** allows for in-vehicle acoustic systems to utilize externally coupled subwoofer solutions (ECS), where the front of the woofer cone is acoustically presented to vehicle occupants, while the back of the cone acoustically "sees" the outside world. System **400** enables significant performance improvements and weight savings over traditional subwoofer solutions, however primary the disadvantage is introduction of audible noise to the outside world. Additionally, an external facing speaker cone of system **400** can also be exposed to environmental weathering, which can present a problem during extreme conditions such as water, snow, ice, heat, or particulates (mud, dirt, rocks).

In one embodiment, system **400** is an automated acoustic woofer ventilation and environmental coupling mechanism. The mechanized shudder or venting solution enables the system to vent the woofer outside of the car under normal conditions, but also seal off the exterior world in situations where environmental noises are an issue, or when the speaker needs additional protection from the environment.

According to one embodiment, system **400** may be provided for a vehicle, such as vehicle **405**, to allow for a movable element associated with the position of a speaker. System **400** is described with reference to a door panel **410** of vehicle **405**, however it should be appreciated that similar configuration may be provided to other parts of a vehicle. In system **400**, a speaker is installed in portion of the vehicle. According to one embodiment, speaker **415** is installed in panel **410**. According to another embodiment, system **400** includes actuator **416** configured to displace element **420** to allow for an opening associated with a back side of the speaker **415** and in the door panel **410**. According to one embodiment actuator **416** may move element **420** in direction **425**. As shown in FIG. 4, actuator **416** displaces panel **420** to reveal opening **430** in door panel **410**. Opening **430** is located in a position of door panel **410** near an external facing cone of speaker **415** according to one embodiment. System **400** may be applied to bidirectional speakers and forward facing speakers, although only the former case is covered by the present invention.

According to one embodiment, actuator relates to one or more of a motor, servo control and/or moveable element configured to displace element **420** from opening **430** by one or more of sliding, rotation, deployment and multidirectional movement in one or more planes. Element **430** may relate to a section of material associated with the door panel (e.g., metal, plastic, etc.). In certain embodiments, element **420** may include a plurality of movable louvers.

In one embodiment, element **420** is a sliding door or shudder system be used to open or close the rear-chamber of the speaker **415** (e.g., woofer) to the outside world. Element **420** may be motor-controlled to enable automatic switching of the two acoustic configurations. The acoustic aperture could be completely open, providing a true ECS acoustic mounting scheme, completely closed, providing a traditional sealed box acoustic mounting scheme, or partially opened to adjust acoustic performance as needed. System **400** may be applied to subwoofers, door woofers, midranges, and/or tweeters.

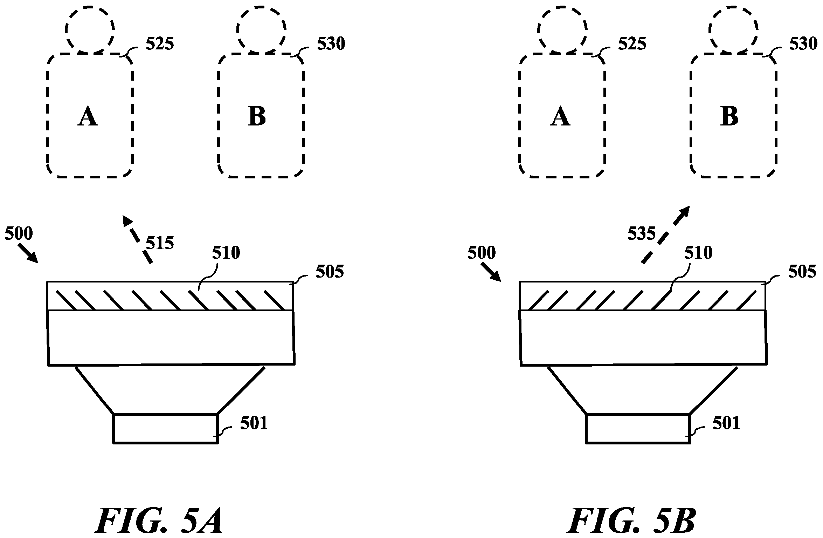

FIGs. 5A-5C depict a directional speaker configuration according to one or more embodiments. According to one embodiment, a directional speaker **500** includes a loudspeaker and directional element **505**. Directional element **505** includes a plurality of movable elements **510.** According to one embodiment, directional element **505** allows for passive directivity of a loudspeaker to be changed automatically to address changing needs of the user. This also has use cases outside of the car, such as audio outside of the vehicle cabin or other structure. Directional speaker **500**may overcome the limitations of speaker configurations that provide an acoustic isolation system, such as ISZ (Independent Sound Zones), which may be largely based on passive directivity of a speaker.

FIGs. 5A-5C depict an automated loudspeaker louver system for dispersion control according to one more embodiments. According to one embodiment, a loudspeaker configuration is provided including a directional element. In one embodiment, the directional element is coupled to the loudspeaker. According to another embodiment, the directional element is arranged in a position near the output area of the speaker, such as the cone. FIGs. 5A-5C show loudspeaker **501** including a directional element **505** according to one or more embodiments. According to one embodiment, directional element **505** is coupled to the loudspeaker **501**. Directional element **505** can includes a plurality of movable elements configured for passive directivity of output of the loudspeaker based on the positioning of the movable elements. By way of example, the movable elements include a surface or surfaces, that act as a waveguide for output of the loudspeaker, such that positioning of the movable elements may direct the output of the loudspeaker in one or more directions. According to one embodiment, moveable elements of the directional element **505** are configured to direct sound in at least one of a straight direction (e.g., in line the output position of the loudspeaker) and a rotated position. In certain embodiments, directional element **505** may be configured to direct sound output to at least a first passenger, and a second passenger. The movable elements of the directional element **505** may be are configured to rotate to a left position, center position, and right position According to one embodiment, directional element **505** may include a housing and a plurality of uniform moveable elements arranged in the housing.

Directional element **505** provides an automated mechanism with a dispersion-controlling louver system to adjust the directionality and acoustic dispersion of loudspeaker **501**. The louver system of directional element **505** may include a series of parallel slats, such as element **510**, that direct acoustic pressure for high frequencies. For a simple example, with listeners in the front two seats of a vehicle, FIG. 5A depicts configuration direction of sound to listener A, passenger **525**, while the configuration of FIG. 5B directs the sound to listener B, passenger **530**.

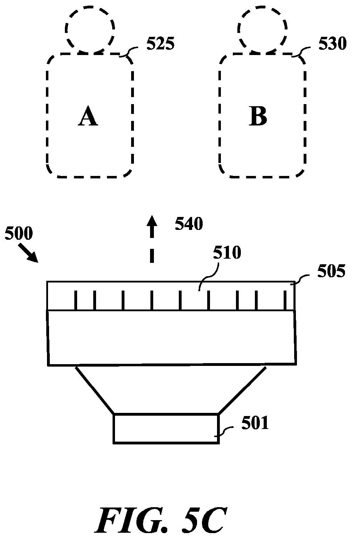

According to one embodiment, directional element **505** may move a plurality of movable elements to direct sound. FIG. 5A depicts moveable elements **510** positioned to direct output of the speaker **501** in direction **515** to focus the sound output towards a particular passenger **525**, listener A of a vehicle. FIG. 5B depicts moveable elements **510** positioned to direct output of the speaker **501** in direction **535** to focus the sound output towards a particular passenger **530**, listener B of a vehicle. FIG. 5C depicts movable elements **510** positioned to direct output of the speaker **501** in direction **540** to focus the sound output towards both passenger **525** and passenger **530**. In one embodiment, movable elements **510** include a moveable louver system mounted to the loudspeaker. By way of example, the movable louver system includes a plurality of parallel slat elements configured to be positioned in a plurality of positions. The plurality of slat elements are configured to direct sound output by the loudspeaker based on the position of slat elements. According to another embodiment, directional element **505**includes a moveable louver system mounted to the loudspeaker. The movable louver system can include a plurality of parallel slat elements configured to be positioned in a plurality of positions, wherein the plurality of slat elements are configured to direct sound output by the loudspeaker based on the position of slat elements. In one embodiment, movable elements **510**move as a unit to direct output of the loudspeaker in at least one direction. The movable elements **510** can rotate on center rotate on ends, or move based on at least one of rotation and sliding.

In one embodiment, movable elements **510** are configured to function as a louver for acoustic dispersion such that movable elements **510** each rotate as a unit and all rotate or move together.

While this disclosure has been particularly shown and described with references to exemplary embodiments thereof, it will be understood by those skilled in the art that various changes in form and details may be made therein without departing from the scope of the claimed embodiments.

## Claims

1. A vehicle door panel (410) comprising a bidirectional loudspeaker (300), the bidirectional loudspeaker (300) comprising:
a first loudspeaker configured to output sound in a first direction; and
a second loudspeaker configured to output sound in a second direction, wherein the first loudspeaker and second loudspeaker are arranged in a coaxial arrangement;
wherein the first loudspeaker is configured to output sound to a vehicle interior and wherein the second loudspeaker is configured to output sound to a vehicle exterior; and
wherein the vehicle door panel (410) further comprises:
a movable element (420) associated with the position of the second loudspeaker to allow for an opening associated with the second loudspeaker, thereby to selectively provide speaker venting for the second loudspeaker, wherein the movable element is a sliding door or shutter system to open or close a rear chamber of the bidirectional speaker (300) to the vehicle exterior.

2. The vehicle door panel (410) of claim 1, wherein the second loudspeaker is configured to output environmental sound.

3. The vehicle door panel (410) of claim 1, wherein the first loudspeaker includes a moveable louver system mounted to the first loudspeaker, the movable louver system including a plurality of parallel slat elements configured to be positioned in a plurality of positions, wherein the plurality of slat elements are configured to direct sound output by the first loudspeaker based on the position of slat elements.

4. The vehicle door panel (410)of claim 1, wherein the first loudspeaker includes an acoustic horn to direct sound inside of a vehicle, and the second loudspeaker includes an acoustic horn to direct sound outside of a vehicle.

5. The vehicle door panel (410) of claim 1, wherein a motor structure of the first loudspeaker is coupled to the motor structure of the second loudspeaker.

6. The vehicle door panel (410) of claim 1, wherein the first direction associated with the first loudspeaker is opposite the second direction associated with the second loudspeaker.

## Patentansprüche

1. Fahrzeugtürverkleidung (410), umfassend einen bidirektionalen Lautsprecher (300), wobei der bidirektionale Lautsprecher (300) Folgendes umfasst:
einen ersten Lautsprecher, der dazu konfiguriert ist, Schall in eine erste Richtung auszugeben; und
einen zweiten Lautsprecher, der dazu konfiguriert ist, Schall in eine zweite Richtung auszugeben, wobei der erste Lautsprecher und der zweite Lautsprecher in einer koaxialen Anordnung angeordnet sind;
wobei der erste Lautsprecher dazu konfiguriert ist, Schall an einen Fahrzeuginnenraum auszugeben, und wobei der zweite Lautsprecher dazu konfiguriert ist, Schall an einen Fahrzeugaußenbereich auszugeben; und
wobei die Fahrzeugtürverkleidung (410) ferner umfasst:
ein bewegliches Element (420), das der Position des zweiten Lautsprechers zugeordnet ist, um eine Öffnung zu ermöglichen, die dem zweiten Lautsprecher zugeordnet ist, um dadurch selektiv eine Lautsprecherbelüftung für den zweiten Lautsprecher bereitzustellen, wobei das bewegliche Element eine Schiebetür oder ein Verschlusssystem ist, um eine hintere Kammer des bidirektionalen Lautsprechers (300) zum Fahrzeugaußenbereich zu öffnen oder zu schließen.

2. Fahrzeugtürverkleidung (410) nach Anspruch 1, wobei der zweite Lautsprecher dazu konfiguriert ist, Umgebungsgeräusche auszugeben.

3. Fahrzeugtürverkleidung (410) nach Anspruch 1, wobei der erste Lautsprecher ein bewegliches Schalllochsystem beinhaltet, das an dem ersten Lautsprecher montiert ist, wobei das bewegliche Schalllochsystem eine Vielzahl von parallelen Lamellenelementen enthält, die so konfiguriert ist, dass sie in einer Vielzahl von Positionen positioniert werden kann, wobei die Vielzahl von Lamellenelementen so konfiguriert ist, dass sie die Schallausgabe des ersten Lautsprechers basierend auf der Position der Lamellenelemente richtet.

4. Fahrzeugtürverkleidung (410) nach Anspruch 1, wobei der erste Lautsprecher ein akustisches Horn beinhaltet, um Schall innerhalb eines Fahrzeugs zu richten, und der zweite Lautsprecher ein akustisches Horn beinhaltet, um Schall außerhalb eines Fahrzeugs zu richten.

5. Fahrzeugtürverkleidung (410) nach Anspruch 1, wobei eine Motorstruktur des ersten Lautsprechers mit der Motorstruktur des zweiten Lautsprechers gekoppelt ist.

6. Fahrzeugtürverkleidung (410) nach Anspruch 1, wobei die erste Richtung, die dem ersten Lautsprecher zugeordnet ist, der zweiten Richtung, die dem zweiten Lautsprecher zugeordnet ist, entgegengesetzt ist.

## Revendications

1. Panneau de porte de véhicule (410) comprenant un haut-parleur bidirectionnel (300), le haut-parleur bidirectionnel (300) comprenant :
un premier haut-parleur configuré pour émettre un son dans une première direction ; et
un second haut-parleur configuré pour émettre un son dans une seconde direction, le premier haut-parleur et le second haut-parleur étant agencés selon un agencement coaxial ;
dans lequel le premier haut-parleur est configuré pour émettre un son vers un intérieur de véhicule et dans lequel le second haut-parleur est configuré pour émettre un son vers un extérieur de véhicule ; et
dans lequel le panneau de porte de véhicule (410) comprend en outre :
un élément mobile (420) associé à la position du second haut-parleur pour permettre une ouverture associée au second haut-parleur, afin de fournir sélectivement une ventilation de haut-parleur pour le second haut-parleur, dans lequel l'élément mobile est une porte coulissante ou un système d'obturateur pour ouvrir ou fermer une chambre arrière du haut-parleur bidirectionnel (300) à l'extérieur de véhicule.

2. Panneau de porte de véhicule (410) selon la revendication 1, dans lequel le second haut-parleur est configuré pour émettre un son d'ambiance.

3. Panneau de porte de véhicule (410) selon la revendication 1, dans lequel le premier haut-parleur comprend un système de persiennes mobiles monté sur le premier haut-parleur, le système de persiennes mobiles comprenant une pluralité d'éléments à lamelles parallèles configurés pour être positionnés dans une pluralité de positions, dans lequel la pluralité d'éléments à lamelles est configurée pour diriger la sortie sonore par le premier haut-parleur sur la base de la position des éléments à lamelles.

4. Panneau de porte de véhicule (410) selon la revendication 1, dans lequel le premier haut-parleur comprend un pavillon acoustique pour diriger le son à l'intérieur d'un véhicule, et le second haut-parleur comprend un pavillon acoustique pour diriger le son à l'extérieur d'un véhicule.

5. Panneau de porte de véhicule (410) selon la revendication 1, dans lequel une structure de moteur du premier haut-parleur est couplée à la structure de moteur du second haut-parleur.

6. Panneau de porte de véhicule (410) selon la revendication 1, dans lequel la première direction associée au premier haut-parleur est opposée à la seconde direction associée au second haut-parleur.
